Europäisches Patentamt

European Patent Office

Office européen des brevets

(19)

(11) **EP 1 238 542 B1**

(12) ## FASCICULE DE BREVET EUROPEEN

(45) Date de publication et mention
de la délivrance du brevet:
**28.05.2003 Bulletin 2003/22**

(21) Numéro de dépôt: **00977633.7**

(22) Date de dépôt: **08.11.2000**

(51) Int Cl.⁷: **H04N 17/00**

(86) Numéro de dépôt international:
**PCT/FR00/03108**

(87) Numéro de publication internationale:
**WO 01/045427 (21.06.2001 Gazette 2001/25)**

(54) **SURVEILLANCE DE LA QUALITE DE SERVICE DANS UNE LIAISON DE TELEVISION NUMERIQUE**

ÜBERWACHUNG DER DIENSTGÜTE EINER DIGITALEN FERNSEHVERBINDUNG

SURVEILLANCE OF THE QUALITY OF SERVICE IN A DIGITAL TELEVISION LINK

(84) Etats contractants désignés:
**AT BE CH CY DE DK ES FI FR GB GR IE IT LI LU MC NL PT SE TR**

(30) Priorité: **13.12.1999 FR 9915926**

(43) Date de publication de la demande:
**11.09.2002 Bulletin 2002/37**

(73) Titulaire: **TELEDIFFUSION DE FRANCE**
**75015 Paris (FR)**

(72) Inventeurs:
• **ABRAHAM, Denis**
**54000 Nancy (FR)**
• **RIBEIRO, Jean**
**57070 Metz (FR)**
• **MICHAUT, Fabien**
**54000 Nancy (FR)**

(74) Mandataire: **Cabinet Martinet & Lapoux**
**BP 405**
**78055 Saint Quentin en Yvelines Cédex (FR)**

(56) Documents cités:
**WO-A-98/17024**

• **TRAUBERG M ET AL: "DIE PROTOKOLLANALYSE. EINE NEUE ANFORDERUNG AN DIE TV-MEssTECHNIK BEI EINFUHRUNG VON MPEG-2 UND DVB" FERNSEH UND KINOTECHNIK,DE,VDE VERLAG GMBH. BERLIN, vol. 50, no. 10, 1 octobre 1996 (1996-10-01), pages 570-572,576-577, XP000641202 ISSN: 0015-0142**
• **SIEBERT P ET AL: "UEBERWACHUNG VON DVB-S-AUSSTRAHLUNGEN" FERNSEH UND KINOTECHNIK,DE,VDE VERLAG GMBH. BERLIN, vol. 51, no. 7, 1 juillet 1997 (1997-07-01), pages 416-422, XP000735984 ISSN: 0015-0142**
• **NOAH J O: "A RATIONAL APPROACH TO TESTING MPEG-2" IEEE SPECTRUM,US,IEEE INC. NEW YORK, vol. 34, no. 5, 1 mai 1997 (1997-05-01), pages 67-72, XP000698889 ISSN: 0018-9235**

EP 1 238 542 B1

**Description**

La présente invention concerne la surveillance de la qualité de service dans une liaison de télévision numérique et plus particulièrement dans un signal de télévision numérique selon les normes MPEG-2 (Moving Picture Expert Group) et DVB (Digital Video Broadcasting).

Actuellement, la qualité de service dans les liaisons établies dans un réseau de télévision numérique est surveillée au moyen de trois ensembles de mesures :

- mesures sur le signal à radiofréquence après modulation du signal de télévision numérique lorsque la liaison à surveiller est une liaison de communication terrestre ou une liaison entre un satellite et une station de diffusion terrestre ou bien une liaison par câbles ou en mode ATM, etc. ; le taux d'erreur binaire BER (Bit Error Rate) dans le signal numérique et le niveau du signal à radiofréquence peuvent être mesurés ;
- mesures dans le flux de transport TS (Transport Stream) du signal de télévision numérique en mesurant 19 paramètres définis par la norme ETR 290, "Measurement guidelines for DVB Systems", ETSI, Mai 1997, à l'aide d'un analyseur de syntaxe selon les normes MPEG-2 et DVB ;
- mesures sur les composantes audio et vidéo des services du signal de télévision numérique.

L'invention est plus particulièrement dirigée vers des mesures du flux de transport numérique TS qui, selon la technique antérieure, nécessitent la mesure d'au moins dix-neuf paramètres selon la norme ETR 290. Ces paramètres d'une compréhension techniquement complexe étant nombreux, ils sont très difficiles à interpréter afin d'estimer rapidement et de manière fiable la qualité de service dans un réseau de télévision numérique. En cas d'erreur, un nombre important d'alarmes sont constatées et doivent: être prises en compte par le moyen de supervision. Celui-ci rencontre alors des difficultés à les gérer en temps réel.

La présente invention vise à simplifier les mesures sur le flux de transport numérique en minimisant le nombre de mesures à réaliser tout en facilitant leur interprétation. Grâce à cette simplification, le nombre de paramètres à prendre en compte est réduit et le coût de la surveillance de la qualité de service est diminué.

A cette fin, un procédé de surveillance de la qualité de service dans une liaison de télévision numérique comprenant cycliquement l'analyse de paquets de flux de transport composant le signal pour en déduire des paramètres d'analyse en nombre prédéterminé, est caractérisé par les étapes suivantes :

- sélectionner préalablement des premiers paramètres d'analyse et des deuxièmes paramètres d'analyse, et
- déterminer périodiquement un premier maximum des premiers paramètres d'analyse sélectionnés et un deuxième maximum des deuxièmes paramètres d'analyse sélectionnés pour en déduire respectivement un premier paramètre représentatif de la synchronisation relative à des équipements dans la liaison et un deuxième paramètre représentatif d'une dégradation de service.

Le premier paramètre représentatif de la synchronisation d'équipements peut dépendre de trois paramètres d'analyse qui sont un paramètre de perte de synchronisation de flux de transport, un paramètre d'erreur de table d'association de programme et un paramètre d'erreur de table de description de programme.

Selon une première réalisation, le deuxième paramètre représentatif d'une dégradation de services peut dépendre de deux paramètres d'analyse qui sont un paramètre d'erreur de compte de continuité et un paramètre d'erreur de transport.

Selon une deuxième réalisation, le deuxième paramètre représentatif d'une dégradation de services peut dépendre de quatre paramètres d'analyse qui sont un paramètre d'erreur de code de redondance cyclique, un paramètre d'erreur de référence d'horloge de programme, un paramètre d'erreur de table d'information de réseau et un paramètre d'erreur de table de description de service.

Les première et deuxième réalisations peuvent: être combinées afin que trois paramètres soient: déterminés pour évaluer la qualité de service dans une liaison de réseau de télévision numérique, c'est-à-dire plus généralement dans un signal de télévision numérique.

A titre d'exemple, un cycle d'analyse de paquets dure environ une seconde, et la période au cours de laquelle les premier et deuxième(s) paramètres représentatifs respectivement de la synchronisation d'équipements et d'une dégradation de service sont déduits est de dix secondes environ.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique entre deux extrémités d'une liaison dans un réseau de télévision numérique ;
- la figure 2 montre la structure d'un paquet de flux de transport selon la norme MPEG-2 ;
- la figure 3 montre deux graphes de variation de paramètres fournis par un analyseur pendant une période prédéterminée pour en déduire l'un des trois paramètres selon l'invention ;
- la figure 4 est un algorithme illustrant le procédé de surveillance de qualité de service selon l'invention ;

et

- la figure 5 montre trois graphes de variation de paramètres fournis selon l'invention par un mesureur de qualité de service.

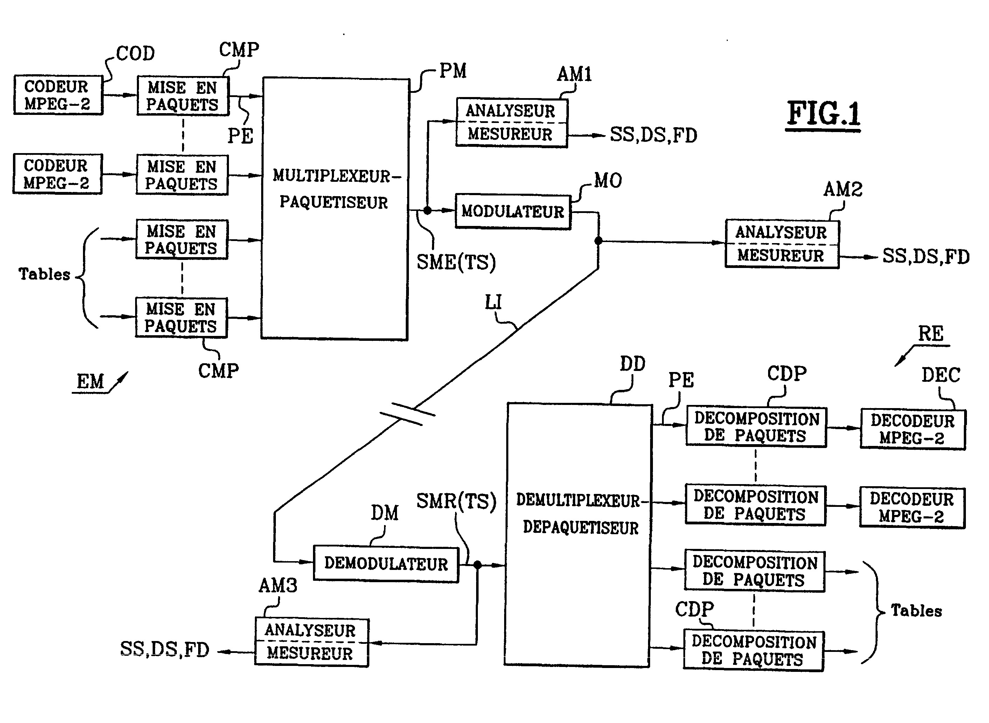

Une liaison LI pour la transmission de signal de télévision numérique entre un émetteur EM et un récepteur RE dans un réseau de télévision numérique selon la norme MPEG-2 est schématisée à la figure 1.

L'émetteur EM comprend essentiellement une pluralité de circuits de mise en paquet élémentaire CMP, un multiplexeur-paquetiseur PM et un modulateur radiofréquence MO. Les circuits de mise en paquet CMP sont reliés respectivement à différentes sources relatives à des composantes associées à plusieurs programmes de service audiovisuel, c'est-à-dire des composantes audio, vidéo et de données, et constituant des codeurs MPEG-2 ainsi qu'à des générateurs de table de signalisation associés à ces programmes, ces derniers concernant plus particulièrement la présente invention.

La signalisation exprimée par des tables particulières PSI (Program Specific Information) spécifie la signalisation relative au signal. multiplex transport SME sortant du multiplexeur-paquetiseur PM afin que le récepteur RE identifie les différents paramètres et composantes pour accéder aux programmes initiaux de service audiovisuel. Parmi les tables de signalisation, une table d'association de programme PAT (Program Association Table) fait correspondre un numéro de programme à un identificateur PID d'une table PMT identifiant les composantes de ce programme, et une table de description de programme PMT (Program Map Table error) fait correspondre des descripteurs variables PID des composantes d'un programme et les caractéristiques primaires de celles-ci. Les circuits de mise en paquet CMP associés aux tables mettent celles-ci sous forme de paquets élémentaires PE appelés sections selon la norme MPEG-2.

Les autres circuits de mise en paquet CMP associés aux composantes des programmes de service audiovisuel transmettent également les flux audio, vidéo et de données sous forme de paquets élémentaires PE.

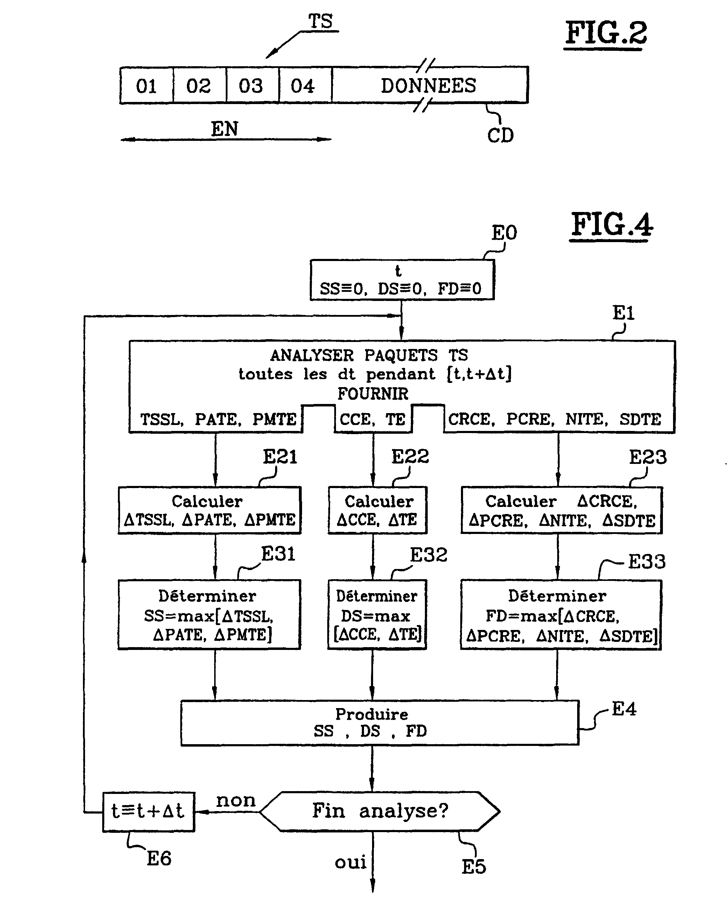

Les paquets élémentaires PE de longueur variable de plusieurs koctets sont découpés en des paquets de transport TS (Transport Stream) et multiplexés dans le multiplexeur-paquetiseur PM pour constituer un signal multiplex d'émission de télévision numérique SME appliqué à l'entrée du modulateur MO. Les paquets TS ont une longueur constante, typiquement de 188 octets. Chaque paquet TS est composé d'un en-tête EN à quatre octets O1 à O4 et d'un champ de données CD à 184 octets, comme montré à la figure 2. Le premier octet O1 de l'en-tête est un octet de synchronisation (Sync Byte) dont la valeur est normalement égale à '47' en code hexadécimal. Les premiers octets dans les paquets émis TS servent à synchroniser des décodeurs MPEG-2 dans le récepteur RE avec les paquets de transport TS reçus par celui-ci. Le deuxième octet O2 de l'en-tête contient notamment un bit indicateur d'erreur de transport, comme premier bit, qui constitue un drapeau servant à indiquer la présence de bits erronés dans le paquet correspondant. Les cinq derniers bits du deuxième octet O2 et le troisième octet O3 de l'en-tête contiennent un identificateur de table PID à 13 bits selon la norme MPEG-2 ou la norme DVB comme défini par la suite. Les quatre derniers bits du quatrième octet O4 de l'en-tête constituent un compte de continuité à 4 bits relatif à un compteur qui est incrémenté d'une unité modulo 16 pour chaque paquet TS correspondant au même identificateur d'un programme de service audiovisuel respectif.

Le signal multiplex SME produit ainsi par le multiplexeur-paquetiseur PM module une ou plusieurs porteuses dans le modulateur MO, typiquement selon une modulation en quadrature et amplitude QAM ou une modulation à quatre états de phase QPSK. Le codage de canal dans le modulateur est un codage de Reed Solomon accompagné ou pas d'un codage convolutif par exemple de type Viterbi. Ces variantes sont adaptées au type de la liaison de transmission de signal de télévision numérique LI qui peut être une liaison par câbles, une liaison entre des relais hertziens, ou bien une liaison par diffusion entre des stations terrestres et un satellite.

Le récepteur RE comprend, de manière réciproque à l'émetteur EM, un démodulateur DM relié à la liaison LI et produisant des paquets de transport TS constituant un signal multiplex de réception de télévision numérique SMR équivalent au signal multiplex d'émission SME, puis un démultiplexeur-dépaquetiseur DD démultiplexant les paquets de transport reçus TS et reconstituant les paquets élémentaires PE qui sont respectivement appliqués à des circuits de décomposition de paquets CDP. Les circuits CDP pour partie appliquent des composantes audio, vidéo et de données à des décodeurs de programme de service audiovisuel MPEG-2 et pour partie appliquent des paquets élémentaires reçus PE (sections) relatifs à la signalisation associée aux programmes à des circuits de récupération de tables de signalisation de manière à reconstituer les tables de signalisation dans le récepteur.

La liaison LI entre l'émetteur EM et le récepteur RE est surveillée au moyen d'un analyseur/mesureur AM comme illustré à la figure 1. L'analyseur/mesureur AM comprend d'une part un analyseur de type connu pour analyser la syntaxe dans un flux de transport selon la norme MPEG-2, et plus précisément pour mesurer les dix-neuf paramètres d'analyse définis dans la norme précitée ETR 290, et un mesureur mettant en oeuvre le procédé de surveillance de qualité de liaison selon l'invention. Typiquement, l'analyseur est un analyseur de flux de type DVMD (MPEG2 measurement decoder) commercialisé par la société allemande RHODE & SCHWARTZ.

Le mesureur utilise neuf des dix-neuf paramètres d'analyse fournis par l'analyseur. Préalablement, ces neuf paramètres ont été choisis parmi les dix-neuf paramètres de la norme ETR 290 afin qu'ils puissent être combinés, selon l'invention, en trois paramètres SS, DS et FD représentatifs de critères de qualité d'une liaison de signal de télévision numérique après l'étude de plusieurs dizaines de combinaisons des 19 paramètres testés sur plusieurs centaines de séquences de signal de télévision numérique.

En pratique, l'analyseur/mesureur analyse le flux de transport de paquet TS dans le signal multiplex émis SME entre le multiplexeur-paquetiseur PM et le modulateur MO dans l'émetteur EM, comme montré en AM1 à la figure 1, ou dans le signal multiplex reçu SMR entre le démodulateur DM et le démultiplexeur-dépaquetiseur DD dans le récepteur RE comme montré en AM3 à la figure 1 ; ou bien encore analyse le flux de transport au niveau de la liaison LI entre le modulateur MO et le démodulateur DM, comme montré en AM2 à la figure 1, un démodulateur (non représenté) étant alors prévu en entrée de l'analyseur.

La définition des neuf paramètres d'analyse selon la norme ETR 290 utilisés dans le procédé de surveillance de qualité de service selon l'invention est rappelée ci-après. Chaque paramètre d'analyse constitue un compte d'erreurs qui est incrémenté d'une unité chaque fois que l'analyseur détecte dans le flux de paquet TS une erreur associée au paramètre. L'analyseur est capable de détecter au maximum une erreur associée au paramètre par cycle d'analyse typiquement d'une seconde environ. Ceci signifie que la valeur d'un paramètre à l'instant t est égale au nombre de cycles d'analyse durant lesquels des erreurs associées at paramètre ont été signalées depuis l'instant initial de l'analyse de flux. Par exemple relativement à un paramètre donné, l'analyse débute à t = 10 h et le compteur de paramètre dans l'analyseur est mis à zéro. Des erreurs se produisent pendant 0,5 seconde à 10h 01 mn et pendant 10 secondes de façon continue à partir de 10h 02 mn. L'analyseur signale :

de 10h à 10h 01 mn : aucune erreur, le paramètre étant égal à zéro ;
de 10h 01 mn 00 s à 10h 01 mn 01 s, que des erreurs sont détectées durant une seconde, le paramètre étant incrémenté d'une unité ;
de 10h 02 mn 00 s à 10h 02 mn 10 s, que des erreurs sont détectées en permanence, le paramètre étant incrémenté d'une unité toutes les secondes.

1) Le premier paramètre TSSL est relatif à une perte de synchronisation dans le flux de transport (Transport Stream Synchronization Loss), c'est-à-dire dans les paquets TS notamment du signal multiplex SME ou SMR. Comme déjà dit, le premier octet O1 dans un paquet TS (figure 2) a normalement la valeur '47' en code hexadécimal. La synchronisation est établie dans le récepteur RE lorsque le démultiplexeur-dépaquetiseur DD détecte cinq premiers octets normaux dans cinq paquets consécutifs TS. La synchronisation est considérée comme perdue ou non établie, lorsque le récepteur ne détecte aucun ou un seul premier octet normal dans trois paquets TS consécutifs ; cet état est considéré comme une perte de synchronisation.

L'analyseur produit un paramètre TSSL correspondant à chaque perte de synchronisation, c'est-à-dire lorsque les premiers octets de trois paquets consécutifs TS ne contiennent au plus qu'un seul paquet correct égal à '47' en code hexadécimal.

2) La table d'association de programme PAT (Program Association Table) contient la liste de tous les programmes de service audiovisuel en correspondance avec des identificateurs PID de tables de description de programme PMT (Program Map Table) associées aux programmes et contenues dans le flux de transport des paquets TS du signal multiplex SME, SMR. Les tables PMT contiennent une description détaillée des programmes, c'est-à-dire des descripteurs des composantes de chaque programme. La table PAT est ainsi essentielle pour le décodage d'un programme audio et vidéo. Si la table PAT est invalide ou contient des erreurs, un décodeur DEC dans le récepteur RE est incapable de sélectionner et de décoder un programme transmis supporté par le signal multiplex SMR.

La table PAT est transmise par des paquets ayant des identificateurs PID égaux à '00' en code hexadécimal. Une table PAT est divisée en plusieurs paquets élémentaires PE de type section de 256 octets au maximum dans un circuit de mise en paquet CMP. Chaque section commence par un octet '00' en tant qu'identificateur de table.

Un deuxième paramètre PATE signalant une erreur de table PAT est produit par l'analyseur en réponse à l'un des trois événements suivants :

- l'identificateur de table PAT est différent de '00' ; ou
- la table PAT est transmise sous une forme cryptée (scrambled) ; ou
- l'intervalle de temps séparant deux tables PAT consécutives relatives à un même programme excède un seuil temporel ST typiquement égal à 0,5 s.

3) Des tables de description de programme PMT décrivent en détail respectivement des programmes de service audiovisuel identifiés dans la table PAT. L'information essentielle contenue dans une table PMT est la liste des descripteurs PID dans tous les paquets TS relatifs aux composantes audio, vidéo et: de données d'un programme respectif, ainsi que les identificateurs PID de paquets TS servant à la transmission de valeurs de référence d'horloge de programme PCR (Program Clock Reference) associés au programme respectif pour récupérer dans le décodeur respectif DEC l'horloge du codeur respectif COD, sans avoir recours à l'horloge de la liaison LI.

Si une table PMT est invalide ou contient des erreurs, le décodeur respectif DEC est incapable de sélectionner et décoder le programme de service audiovisuel respectif dans le signal multiplex SMR. Les descripteurs PID des composantes du programme dans la table PMT sont variables et compris entre '0010' à '1FFE' en code hexadécimal. Les tables PMT peuvent être divisées en plusieurs parties élémentaires de type section, avec un maximum de 256 sections, chaque section correspondant à un programme de service audiovisuel. L'identificateur de la table PMT de chaque section et donc de chaque programme est normalement égal à '02'.

Un troisième paramètre PMTE est fourni par l'analyseur en réponse à l'un des événements suivants :

- l'identificateur de la table PMT est différent: de '02' ; ou
- la table PMT est transmise sous une forme cryptée (scrambled) ; ou
- l'intervalle de temps entre deux tables PMT transmises consécutivement excède le seuil temporel ST typiquement égal à 0,5 s.

4) Le compte de continuité à quatre bits contenu dans le quatrième octet 04 de l'en-tête EN d'un paquet TS est le compte d'un compteur qui est contenu dans le multiplexeur-paquetiseur PM et qui est incrémenté d'une unité pour chaque paquet TS avec le même identificateur PID. Le compte du compteur varie de 0 à 15 modulo 16. Le compte de continuité sert à repérer les paquets manquants d'un programme ou reçus chacun plus d'une fois.

La norme MPEG-2 tolère des discontinuités des comptes si celles-ci sont indiquées dans le champ d'adaptation optionnel AF (Optional Adaptation Field) des paquets concernés. Cette méthode est principalement utilisée pour supprimer les messages d'erreur en cas de changement de programme dû à un re-multiplexage du flux de transport de paquets TS.

Un quatrième paramètre CCE signalant une erreur de compte de continuité (Continuity Count Error) est produit par l'analyseur en réponse à l'un des trois événements suivants :

- un même paquet TS a été reçu au moins deux fois dans l'analyseur sans avoir été indiqué dans le champ AF ; ou
- un paquet TS manque ; ou
- des paquets TS n'arrivent pas selon l'ordre correct à l'émission.

5) Le drapeau constitué par le bit d'indicateur d'erreur de transport inclus dans le deuxième octet 02 de l'en-tête EN de chaque paquet TS est levé par décodage de Viterbi ou décodage ce Reed Solomon lors de la démodulation dans le démodulateur DM pour signaler l'incapacité du code correcteur d'erreurs correspondant à corriger toutes les erreurs. Un paquet signalé par ce drapeau ne doit pas être interprété par le décodeur DEC correspondant. Dans ce cas, l'analyseur de flux produit un cinquième paramètre, dit paramètre d'erreur de transport, sous la forme d'un bit TE à l'état logique "1" et ne traite pas le paquet signalé par le drapeau.

6) La norme MPEG-2 prévoit notamment trois tables de signalisation qui sont les deux tables précitées PAT et PMT, et une table d'accès conditionnel CAT (Conditional Access Table), et la norme européenne DVB (Digital Video Broadcasting) prévoit des tables de voie de service, toutes ces tables étant transmises périodiquement. Notamment, les tables de service sont une table d'information de réseau NIT (Network Information Table), une table d'information d'événements EIT (Event Information Table), une table de description de services SDT (Service Description Table), une table d'association de bouquets BAT (Bouquet Association Table) et une table de décalage horaire TOT (Time Offset Table). Toutes ces tables sont transmises sous forme de paquets élémentaires de type section. La fin de chaque section de table contient un code de contrôle CS (checksum) qui est calculé à la transmission dans l'émetteur EM et à la réception dans le récepteur RE en fonction d'un Codage à Redondance Cyclique CRC introduit classiquement dans chaque section en fonction du champ d'information de celle-ci et qui permet dans le récepteur de vérifier le champ d'information de la section reçue. Combiné au code de contrôle calculé à la réception, le code de contrôle reçu CS dans chaque section de table est normalement égal à 0.

Si le code de contrôle résultant est différent de 0, le décodeur correspondant MPEG-2 DEC dans le récepteur ne prend pas en compte les informations contenues dans la table concernée. Si une telle erreur est détectée par l'analyseur de flux, celui-ci est incapable de connaître les informations de la table qui sont erronées. Dans ce cas, l'analyseur de flux signale une erreur en produisant un paramètre d'Erreur de Code de Redondance Cyclique CRCE en réponse à un code de contrôle résultant CS de l'une des tables précitées PAT, PMT, CAT, NIT, EIT, SDT, BAT et TOT différent de 0.

7) Comme déjà dit, la référence d'horloge de programme PCR définit la propre horloge d'un programme de service audiovisuel donné. Cette référence d'horloge permet de caler l'horloge interne du décodeur respectif DEC dans le récepteur RE sur l'horloge interne du codeur respectif COD dans l'émetteur EM. Chaque table de description de programme PMT indique les descripteurs PID des paquets contenant la référence d'horloge PCR pour le programme respectif.

La norme MPEG-2 tolère des discontinuités des valeurs des références d'horloge PCR à condition que les discontinuités soient indiquées dans le champ d'adaptation optionnel AF du paquet concerné, ce qui supprime des messages d'erreur relatifs aux références d'horloge PCR dans le cas d'un changement de programme de service audiovisuel dû à un re-multiplexage du flux de transport.

Un septième paramètre PCRE relatif à une erreur de référence d'horloge de programme (Program Clock Reference Error) est fourni par l'analyseur de flux en réponse à l'un des deux événements suivants :

- l'intervalle de temps entre deux paquets consécutifs contenant une référence d'horloge PCR d'un programme donné excède un deuxième seuil temporel ST2 typiquement égal à 100 ms sans que cet excès ne soit signalé dans le champ d'adaptation optionnel AF ; ou
- l'intervalle de temps entre les réceptions de deux paquets contenant une référence d'horloge PCR du programme donné excède un troisième seuil ST3 typiquement égal à 40 ms.

8-9) Chacune des tables d'information de réseau NIT et de description de service SDT est insérée dans le flux des paquets de transport TS comme des données additionnelles et contiennent des informations relatives à la date courante et à la description d'un programme de télévision dans un réseau et/ou des programmes dans d'autres réseaux, etc.. Chacune de ces tables est transmise sous forme de paquets élémentaires TE de type section et est présente périodiquement dans le flux.

Les tables de signalisation et de voie de service n'ont pas toutes un identificateur PID différent : par exemple les paquets des tables de date et d'heure en temps universel TDT (Time and Date Table) et les tables TOT ont des identificateurs identiques PID. Ces tables sont différenciées par leur identificateur de table ce qui permet aux décodeurs selon la norme MPEG-2 de fonctionner en accord avec les normes de diffusion vidéonumérique DVB (Digital Video Broadcasting).

L'identificateur de la table NIT est correct: lorsqu'il est égal à '40' ou '41' en code hexadécimal, et l'identificateur de la table SDT est correct lorsqu'il est égal à '42' ou '46' en code hexadécimal.

Des huitième et neuvième paramètres d'erreur de table NITE ou SDTE sont produits par l'analyseur de flux respectivement en réponse à une erreur relative à la table NIT et à une erreur relative à la table SDT, c'est-à-dire en réponse à l'événement suivant relatif à chacune des tables NIT et SDT :

- un paquet avec un identificateur PID conforme aux identificateurs de signalisation et de voie de service est détecté mais avec un identificateur erroné différent de '40' ou '41' pour la table NIT ou différent de '42' ou '46' pour la table SDT ; ou
- l'intervalle de temps entre deux sections de la table NIT (paquets élémentaires) avec l'identifiant correct '40' ou '41' excède un seuil typiquement de 10 s pour la table NIT, ou entre deux sections de la table SDT avec l'identifiant correct '42' ou '46' excède un seuil typiquement de 2 s pour la table SDT.

Conformément à l'invention, le mesureur associé à l'analyseur de flux surveille la qualité de service dans la liaison de transmission de signal de télévision numérique LI au moyen de trois paramètres dépendant des neuf paramètres d'analyse précités selon la norme ETR 290 : un paramètre de Synchronisation des Services SS, un paramètre de Dégradations des Services DS et un paramètre de Fortes Dégradations FD.

Le paramètre de synchronisation des services SS est défini comme le maximum des variations du paramètre de perte de synchronisation dans le flux de transport TSSL, du paramètre d'erreur de table d'association de programme PATE et du paramètre d'erreur de table de description de programme PMTE pendant une période prédéterminée $\Delta t$. Par exemple, chacun des trois paramètre d'analyse précités TSSL, PATE et PMTE est fourni à chaque cycle d'analyse des paquets TS de dt = 1s environ par l'analyseur de flux et le mesureur produit le maximum de la variation de ces trois paramètres d'analyse en tant que paramètre SS toutes les périodes $\Delta t$ = 10 s environ. Le paramètre SS indique si les équipements en amont du mesureur/analyseur dans la liaison LI peuvent se synchroniser sur le flux de transport initialement dans le signal multiplex émis SME. Si le paramètre SS est différent de 0, ceci indique que les équipements peuvent ne pas se synchroniser et les services de programme audiovisuel sont absents dans la liaison.

Le paramètre de dégradation des services DS est défini comme le maximum des variations du paramètre d'erreur de compte de continuité CCE et du paramètre d'erreur de transport TE pendant la période $\Delta t$. Le paramètre DS permet d'évaluer avec précision le niveau de dégradation des services. En l'absence de dégradation des services, le paramètre DS a une valeur nulle. Le niveau de dégradation de la qualité de service est proportionnel à la valeur du paramètre DS.

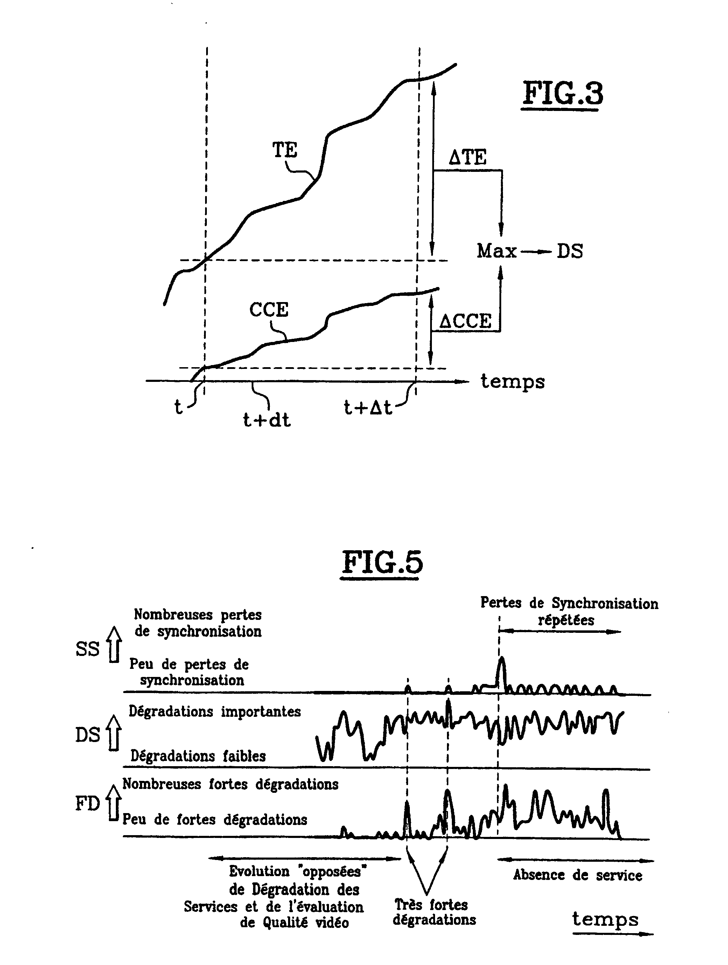

A titre d'exemple, la figure 3 montre deux graphes des variations $\Delta CCE$ et $\Delta TE$ du paramètre d'analyse CCE et TE fournis par l'analyseur pendant un inter-

valle de temps $\Delta t$ afin d'en déduire leur maximum égal au paramètre de dégradations des services DS selon l'invention. Par exemple si à l'instant t, on a CCE(t) = 10 et TE(t) = 2, et si à la fin de la période t + $\Delta t$, on a CCE (t + $\Delta t$) = 14 et TE(t + $\Delta t$) = 11, alors le mesureur calcule

$$\Delta CCE = CCE(t + \Delta t) - CCE(t) = 4,$$

$$\Delta TE = TE(t + \Delta t) - TE(t) = 9$$

soit

$$DS = max[\Delta CCE, \Delta TE] = 9$$

Le paramètre de fortes dégradations FD est défini comme le maximum des variations du paramètre d'erreur de code de redondance cyclique CRCE, du paramètre d'erreur de référence d'horloge de programme PCRE, du paramètre d'erreur de table d'information de réseau NITE et du paramètre d'erreur de table de description de service SDTE pendant la période $\Delta t$. Le paramètre FD indique la présence de dégradations très importantes et est très complémentaire du paramètre DS. Une valeur nulle du paramètre FD indique l'absence de fortes dégradations dans la liaison. Une valeur non nulle du paramètre FD permet de connaître le niveau avec lequel des fortes dégradations interviennent dans la liaison.

Comme montré à la figure 4, le procédé de surveillance de la qualité de service dans la liaison LI comprend essentiellement les étapes E0 à E6.

A l'étape initiale E0, une variable de temps t est fixée à un instant initial d'analyse et de mesure de paramètres et des variables SS, DS et FD correspondant aux trois paramètres selon l'invention sont mises à zéro.

A chaque cycle élémentaire d'analyse de paquets dt typiquement d'une seconde environ pendant l'étape E1, l'analyseur analyse les paquets de flux de transport TS, par exemple dans le signal multiplex SME lorsqu'il est à la position AM1 (figure 1), ou dans la liaison LI lorsqu'il est à la position AM2, ou dans le signal multiplex de réception SMR lorsqu'il est à la position AM3. A chaque cycle d'analyse dt, l'analyseur fournit les neuf paramètres d'analyse TSSL, PATE, PMTE, CCE, TE, CRCE, PCRE, NITE et SDTE.

Puis à la suite de l'étape E1, le procédé comprend trois chemins d'étapes parallèles analogues E21-E31, E22-E32 et E23-E33 afin que le mesureur calcule simultanément les maximums des variations des paramètres d'analyse dont dépendent respectivement les trois paramètres SS, DS et FD selon l'invention, et plus précisément pour chacun des trois paramètres de l'invention, le maximum des variations de paramètres d'analyse entre l'instant t et l'instant précédent t - $\Delta t$. Ainsi, dans le premier chemin E21-E31, les variations $\Delta TSSL$, $\Delta PATE$ et $\Delta PMTE$ des paramètres respectifs TSSL, PATE et PMTE sont calculées, et le maximum de ces trois variations détermine le premier paramètre de synchronisation des services SS selon l'invention. Dans le deuxième chemin E22-E32, les variations $\Delta CCE$ et $\Delta TE$ des paramètres respectifs CCE et TE sont calculées, et le maximum de ces deux variations détermine le deuxième paramètre de dégradations des services DS selon l'invention. Dans le troisième chemin E23-E33, les variations $\Delta CRCE$, $\Delta PCRE$, $\Delta NITE$ et $\Delta SDTE$ des quatre derniers paramètres CRCE, PCRE, NITE et SDTE sont calculées, et le maximum de ces quatre variations détermine le troisième paramètre FD selon l'invention.

Après les trois ensembles parallèles d'étapes précédentes, à la fin de la période $\Delta t$, les trois paramètres mesurés de l'invention SS, DS et FD sont produits par exemple pour être transmis et/ou affichés et/ou imprimés à une étape E4.

Puis si l'analyse est poursuivie à l'étape E5, une autre période de mesure $\Delta t$ est répétée en incrémentant de $\Delta t$ la variable t à l'étape E6.

La figure 5 montre à titre d'exemple les variations des trois paramètres de l'invention SS, DS et FD en fonction du temps. On constate que :

- lorsque le paramètre de synchronisation des services SS est répété, un service ne peut s'établir et il est impossible d'évaluer une qualité de service;
- le paramètre de dégradation des services DS évolue à l'inverse du niveau de qualité de service : lorsque l'un croît, l'autre diminue ;
- des pics dans la variation du paramètre de fortes dégradations FD signalent des niveaux très faibles de la qualité de service.

## Revendications

1. Procédé de surveillance de la qualité de service dans une liaison de transmission de signal de télévision numérique (SME, LI, SMR), comprenant cycliquement l'analyse de paquets de flux de transport (TS) composant le signal pour en déduire des paramètres d'analyse en nombre prédéterminé, **caractérisé par** les étapes suivantes :

   - sélectionner préalablement des premiers paramètres d'analyse (TSSL, PATE, PMTE) et des deuxièmes paramètres d'analyse (CCE, TPE ; CRCE, PCRE, NITE, SDTE), et
   - déterminer (E1 à E6) périodiquement le maximum des variations ($\Delta TSSL$, $\Delta PATE$, $\Delta PMTE$) des premiers paramètres d'analyse sélectionnés et le maximum des variations ($\Delta CCE$, $\Delta TE$ ; $\Delta CRCE$, $\Delta PCRE$, $\Delta NITE$, $\Delta SDTE$) des deuxièmes paramètres d'analyse sélectionnés pour en déduire respectivement un premier paramètre (SS) représentatif de la synchronisation relative à des équipements (EM, REC, LI) dans la liaison et un deuxième paramètre (DS ; FD) représentatif d'une dégradation de service.

2. Procédé conforme à la revendication 1, selon lequel le premier paramètre (SS) représentatif de la synchronisation d'équipements dépend de trois paramètres d'analyse qui sont un paramètre de perte de synchronisation de flux de transport (TSSL), un paramètre d'erreur de table d'association de programme (PATE) et un paramètre d'erreur de table de description de programme (PMTE).

3. Procédé conforme à la revendication 1 ou 2, selon lequel le deuxième paramètre (DS) représentatif d'une dégradation de services dépend de deux paramètres d'analyse qui sont un paramètre d'erreur de compte de continuité (CCE) et un paramètre d'erreur de transport (TE).

4. Procédé conforme à la revendication 1 ou 2, selon lequel le deuxième paramètre (FD) représentatif d'une dégradation de services dépend de quatre paramètres d'analyse qui sont un paramètre d'erreur de code de redondance cyclique (CRCE), un paramètre d'erreur de référence d'horloge de programme (PCRE), un paramètre d'erreur de table d'information de réseau (NITE) et un paramètre d'erreur de table de description de service (SDTE).

5. Procédé conforme à la revendication 1 ou 2, selon lequel deux deuxièmes paramètres représentatifs d'une dégradation de services sont déterminés, l'un dépendant de deux paramètres d'analyse qui sont un paramètre d'erreur de compte de continuité (CCE) et un paramètre d'erreur de transport (TE), et l'autre dépendant de quatre paramètres d'analyse qui sont un paramètre d'erreur de code de redondance cyclique (CRCE), un paramètre d'erreur de référence d'horloge de programme (PCRE), un paramètre d'erreur de table d'information de réseau (NITE) et un paramètre d'erreur de table de description de service (SDTE).

6. Procédé conforme à l'une quelconque des revendications 1 à 5, selon lequel un cycle d'analyse (dt) de paquets dure environ une seconde, et la période (Δt) au cours de laquelle les premier et deuxième paramètres représentatifs respectivement de la synchronisation d'équipements et d'une dégradation de service (SS ; DS, FD) sont déduits est de dix secondes environ.

**Patentansprüche**

1. Verfahren zur Überwachung der Dienstgüte der Signalübertragung einer digitalen Fernsehverbindung (SME, LI, SMR), das eine zyklische Analyse von Paketen des Transportflusses (TS) beinhaltet, die das Signal zur Ableitung der Analyseparameter, die eine festgelegte Anzahl haben, bilden, **gekennzeichnet durch** die folgenden Schritte:

   - vorläufige Auswahl der ersten Analyseparameter (TSSL, PATE, PMTE) und der zweiten Analyseparameter (CCE, TPE; CRCE, PRCE, NITE, SDTE) und
   - periodische Bestimmung (E1 bis E6) des Maximums der Variationen (ΔTSSL, ΔPATE, ΔPMTE) der ersten Analyseparameter und das Maximum der Variationen (ΔCCE, ΔTE ; ΔCRCE, ΔPRCE, ΔNITE, ΔSDTE) der zweiten Analyseparameter, um davon jeweils einen ersten Parameter (SS), der die Synchronisation in der Verbindung bezüglich der Komponenten (EM, RE, LI) repräsentiert, und einen zweiten Parameter (DS ; FD), der eine Verschlechterung des Dienstes repräsentiert, abzuleiten.

2. Verfahren gemäß Anspruch 1, nach dem der erste Parameter (SS), der die Synchronisation der Komponenten repräsentiert, von drei Analyseparametern abhängt, wovon einer ein Parameter des Synchronisationsverlusts des Transportflusses (TSSL), einer ein Fehlerparameter der Assoziationstabelle des Programms (PATE) und einer ein Fehlerparameter der Beschreibungstabelle des Programms (PTME) ist.

3. Verfahren gemäß Anspruch 1 oder 2, nach dem der zweite Parameter (DS), der eine Verschlechterung des Dienstes repräsentiert, von zwei Analyseparametern abhängt, wovon einer ein Parameter des Fehlerkontos der Kontinuität (CCE) und einer ein Parameter der Transportfehler (TE) ist.

4. Verfahren gemäß Anspruch 1 oder 2, nach dem der zweite Parameter (FD), der eine Verschlechterung des Dienstes repräsentiert, von vier Analyseparametern abhängt, wovon einer ein Fehlerparameter der Kodierung mit zyklischer Redundanz (CRCE), einer ein Fehlerparameter des Taktgebers des Programms (PCRE), einer ein Fehlerparameter der Informationstabelle des Netzes (NITE) und einer ein Fehlerparameter der Beschreibungstabelle des Dienstes (SDTE) ist.

5. Verfahren gemäß Anspruch 1 oder 2, nach dem zwei zweite Parameter, die eine Verschlechterung des Dienstes repräsentieren, bestimmt werden, wobei einer von zwei Analyseparametern abhängt, wovon einer ein Parameter des Fehlerkontos der Kontinuität (CCE) und einer ein Parameter der Transportfehler (TE) ist, und der andere von vier Parametern abhängt, wovon einer ein Fehlerparameter der Kodierung mit zyklischer Redundanz (CRCE), einer ein Fehlerparameter des Taktgebers des Programms (PCRE), einer ein Fehlerparameter der Informationstabelle des Netzes (NITE) und einer ein Fehlerparameter der Beschreibungstabelle des Dienstes (SDTE) ist.

**6.** Verfahren nach irgendeinem der Ansprüche 1 bis 5, nach dem ein Zyklus der Analyse von Paketen (dt) etwa eine Sekunde dauert, und die Periodendauer (Δt), in deren Verlauf die ersten und zweiten Parameter abgeleitet werden, die jeweils die Synchronisation der Komponenten und die Verschlechterung des Dienstes (SS ; DS ; FD) repräsentieren, ungefähr zehn Sekunden beträgt.

**Claims**

**1.** A quality-of-service surveillance method for use in a transmission link of digital television signal (SME, LI, SMR), including cyclic analysis of transport stream (TS) packets constituting the signal to deduce therefrom a predetermined number of analysis parameters, **characterized by** the following steps:

- preselecting first analysis parameters (TSSL, PATE, PMTE) and second analysis parameters (CCE, TPE; CRCE, PCRE, NITE, CDTE), and
- periodically determining (El to E6) the maximum of the variations (ΔTSSL, ΔPATE, ΔPMTE) in the preselected first analysis parameters and the maximum of the variations (ΔCCE, ΔTE; ΔCRCE, ΔPCRE, ΔNITE, ΔSDTE) in the preselected second analysis parameters to deduce therefrom, respectively, a first parameter (SS) representative of the synchronization relative to equipment units (EM, REC, LI) in the link and a second parameter (DS; FD) representative of a degradation of services.

**2.** A method according to claim 1, wherein the first parameter (SS) representative of the synchronization of equipment units depends on three analysis parameters which are a transport stream synchronization loss parameter (TSSL), a program association table error parameter (PATE) and a program map table error parameter (PMTE).

**3.** A method according to claim 1 or 2, wherein the second parameter (DS) representative of a degradation of services depends on two analysis parameters which are a continuity count error parameter (CCE) and a transport error parameter (TE).

**4.** A method according to claim 1 or 2, wherein the second parameter (FD) representative of a degradation of services depends on four analysis parameters which are a cyclic redundancy check error parameter (CRCE), a program clock reference parameter (PCRE), a network information table error parameter (NITE) and a service description table error parameter (SDTE).

**5.** A method according to claim 1 or 2, wherein two second parameters representative of a degradation of services are determined, one depending on two analysis parameters which are a continuity count error parameter (CCE) and a transport error parameter (TE), and the other depending on four analysis parameters which are a cyclic redundancy code error parameter (CRCE), a program clock reference error parameter (PCRE), a network information table error parameter (NITE) and a service description table error parameter (SDTE).

**6.** A method according to any one of claims 1 to 5, wherein a packet analysis cycle (dt) has a duration of approximately one second, and the period (Δt) during which the first and second parameters respectively representative of the synchronization of equipment units and of a degradation of services (SS; DS, FD) are deduced is approximately ten seconds.

## FIG.1

EP 1 238 542 B1

**FIG.2**

TS

| 01 | 02 | 03 | 04 | DONNEES |

EN

CD

**FIG.4**

E0

| t |
| SS≡0, DS≡0, FD≡0 |

E1

ANALYSER PAQUETS TS
toutes les dt pendant [t,t+Δt]
FOURNIR

| TSSL, PATE, PMTE | CCE, TE | CRCE, PCRE, NITE, SDTE |

E21

| Calculer |
| ΔTSSL, ΔPATE, ΔPMTE |

E22

| Calculer |
| ΔCCE, ΔTE |

E23

| Calculer ΔCRCE, |
| ΔPCRE, ΔNITE, ΔSDTE |

E31

| Déterminer |
| SS=max[ΔTSSL, |
| ΔPATE, ΔPMTE] |

E32

| Déterminer |
| DS=max |
| [ΔCCE, ΔTE] |

E33

| Déterminer |
| FD=max[ΔCRCE, |
| ΔPCRE, ΔNITE, ΔSDTE] |

| Produire |
| SS , DS , FD |

E4

t≡t+Δt

non

Fin analyse?

E6

oui

E5

## FIG.3

TE

ΔTE

Max → DS

CCE

ΔCCE

temps

t

t+dt

t+Δt

## FIG.5

SS ⇕

Nombreuses pertes
de synchronisation

Peu de pertes de
synchronisation

Pertes de Synchronisation
répétées

DS ⇕

Dégradations importantes

Dégradations faibles

FD ⇕

Nombreuses fortes dégradations

Peu de fortes dégradations

Evolution "opposées"
de Dégradation des
Services et de l'évaluation
de Qualité vidéo

Très fortes
dégradations

Absence de service

temps